# EUROPÄISCHE PATENTSCHRIFT

(11) **EP 2 527 262 B1**
(45) Veröffentlichungstag und Bekanntmachung des Hinweises auf die Patenterteilung: **24.09.2014**
(21) Anmeldenummer: 12002814.7
(22) Anmeldetag: 21.04.2012
(51) Int. Cl.: B65B 43/52, B65B 43/54, B65B 65/02, B65G 35/08, B65B 9/04

(54) **Vorrichtung zum Befüllen von Behältern**
Apparatus for filling containers
Machine pour le remplissage de récipients

(30) Priorität: 25.05.2011 DE 102011103256
(43) Veröffentlichungstag der Anmeldung: 28.11.2012
(73) Patentinhaber: Hamba Filltec GmbH & Co. KG, 66130 Saarbrücken (DE)
(72) Erfinder: Junk, Martin, 66636 Tholey (DE)
(74) Vertreter: Ostriga Sonnet Wirths & Vorwerk

(56) Entgegenhaltungen:
- EP-A1- 0 995 700
- DE-A1- 10 100 908
- US-B1- 6 170 634

## Beschreibung

Die Erfindung betrifft eine Vorrichtung zum Befüllen von Behältern, insbesondere von Flaschen und Bechern, mit Nahrungsmitteln, insbesondere mit dünnflüssigen bis pastösen Molkerei- und Fettprodukten, Säften, Wässern oder dergleichen, mit einem Obertrum und einem Untertrum, welche die Haupttrümer der Vorrichtung sind und mit Seitentrümern, die die Haupttrümer miteinander verbinden, mit einer Vielzahl von endlosantriebsmittelfrei aneinander angeordneten Tragelementen, die mit Aufnahmen für die Behälter versehen und durch die Vorrichtung und entlang der Trümer und entlang von Arbeitsstationen geführt sind, mit Laufleisten, auf denen die Tragelemente bei der Führung durch die Haupttrümer aufliegen, mit einem Antrieb, der die Tragelemente zumindest entlang der Arbeitsstationen führt und mit zumindest einem als Hubwerk ausgebildeten Seitentrum, vermittels dessen die Tragelemente bei Ihrem Lauf durch die Vorrichtung zwischen den Haupttrümern wechseln.

Gattungsgemäße Vorrichtungen sind beispielsweise in EP 1495997 B1 gezeigt. Es handelt sich um sogenannte kettenlose Abfüllvorrichtungen für Nahrungsmittel. Als kettenlos werden sie bezeichnet, um diese Vorrichtungen vom heterogenen Stand der Technik abzugrenzen. Beim heterogenen Stand der Technik gibt es ein Endlos-Antriebsmittel, insbesondere in Form einer Kette, an welcher die Tragelemente befestigt sind und durch die Anlage gefördert werden.

Im gattungsgemäßen Stand der Technik, wie die Erfindung ihn definiert und zu welchem die schon vorgenannte EP 1495997 B1 gehört, existiert zwar eine Anordnung der Tragmittel aneinander im weitesten Sinne, zumindest in einem der Haupttrümer. Eine Kopplung der Tragelemente durch ein gemeinsames Endlos-Antriebsmittel ist jedoch nicht vorgesehen.

EP 1495997 B1 beschreibt stattdessen eine Vorrichtung, bei welcher die Tragelemente mit ihren zueinander weisenden Stirnflächen aneinander angeordnet sind, und unverbunden durch zumindest eines der Haupttrümer geschoben werden. Dabei werden unterschiedliche Antriebsarten offenbart, wie beispielsweise der Antrieb mittels eines Linearkolbens oder ein Schneckenantrieb.

Neben geschlossenen Seitentrümern, durch welche die Zellenbretter auf bogenartigen Schienen vom Obertrum ins Untertrum und zurück bewegt werden, zeigt EP 1495997 B1 auch zwei das Seitentrum bildende Hubwerke, bei welchen die Tragelemente in endlos umlaufende Aufnahmen eingeschoben und zwischen den Haupttrümern verfahren werden.

Als nicht gattungsgemäßer Stand der Technik offenbart EP 0 995 700 A1 eine Fördereinrichtung für Formen einer Kunststofftiefziehvorrichtung. Dort durchlaufen die Formen endlos Obertrum, Seitentrum und Untertrum, sind jedoch zueinander beabstandet. Die Vortriebskraft im Ober- und Untertrum - realisiert über einen Schneckenantrieb - wird demzufolge in jede Form unmittelbar eingeleitet. Die Formen greifen hierzu über Zapfen in die Schnecke ein. Bei der Erfindung hingegen sind die Tragelemente aneinander angeordnet.

Der Wechsel vom Ober- ins Untertrum innerhalb der Seitentrümer ist in einem ersten Ausführungsbeispiel über vertikal gerichtete Schnecken gelöst, so dass die Formen bei Ihrem Umlauf entlang der Trümer von einer Schnecke auf die nächste Schnecke wechseln. In einem zweiten Ausführungsbeispiel laufen Tragleisten paternosterartig um, um die Tiefziehformen zwischen den Hauptrümern umzusetzen.

Die in EP 1495997 B1 dargestellten Hubwerke sind in ihrem mechanischen Aufbau vergleichsweise aufwändig, so dass es Aufgabe der Erfindung ist, ein in seinem Aufbau einfacher gestaltetes Seitentrum für eine gattungsgemäße Vorrichtung zu schaffen.

Gelöst wird die Aufgabe von einer Vorrichtung mit den Merkmalen des Anspruchs 1, insbesondere mit den kennzeichnenden Merkmalen, wonach das Hubwerk eine ausschließlich vertikal verfahrbare Hubeinrichtung zur Überführung der Tragelemente von einem Haupttrum in das andere Haupttrum aufweist.

Der wesentliche Vorteil der erfindungsgemäßen Vorrichtung liegt insbesondere darin, dass sie ohne den Umlauf von Aufnahmen für die Zellenbretter auskommt und so insbesondere keine rotierende Wellen oder Ähnliches vorzusehen sind.

Eine besonders bevorzugte Ausführungsform kennzeichnet sich dadurch, dass das die Aggregate des Hubwerks außerhalb einer Bewegungsbahn der Tragelemente durch das jeweilige Haupttrum angeordnet sind.

Ein derart gestaltetes Hubwerk vereinfacht den sogenannten Formatwechsel, also den Wechsel der Tragelemente zur Befüllung anderer Behälterarten und Größen, erheblich, da die Bewegungsbahnen der Tragelemente in den Haupttrümern frei zugänglich sind. So können die Tragelemente ohne Behinderung durch Hubwerksaggregate und/oder Mechaniken am Ende des jeweiligen Haupttrums einfach entnommen werden bzw. am Anfang des jeweiligen Haupttrums einfach eingegliedert werden. Erfindungsgemäß behindern die Seitentrümer mit ihren Hubwerken nicht länger das seitentrumseitige Entnehmen der Tragelemente.

Es ist weiterhin vorgesehen, dass die Hubeinrichtung mit Laufleistenabschnitten versehen ist, die zur Aufnahme der Tragelemente in die Laufleistenebenen der Haupttrümer eingliederbar sind.

Der wesentliche Vorteil bei dieser Ausführungsform ist, dass keine gesondert anzufertigenden Haltelemente eingesetzt werden müssen, die die Tragelemente aufzunehmen haben. Stattdessen wird das Tragelement zur Fortsetzung seiner Bewegungsbahn aus dem Haupttrum hinausgeschoben, ohne in eine gesonderte Vorrichtung eingliedert werden zu müssen.

Um eine hinsichtlich der Längsachse der Vorrichtung saubere Axialausrichtung der Tragelemente auf ihrem Weg zwischen den Haupttrümern und zur jeweiligen Wiedereingliederung sicherzustellen, und um sicherzustellen, dass das Tragelement positionssicher zwischen den Haupttrümern verfahren werden kann, ist vorgesehen, dass das Hubwerk eine Führungseinrichtung aufweist, die eine positionsfeste Anordnung eines Tragelementes im Hubwerk während der Vertikalbewegung sicherstellt.

Konkret ist vorgesehen, dass die Führungseinrichtung als Vertikalschiene ausgebildet ist, in die ein Positionierstift des Tragelementes während der Vertikalbewegung der Hubeinrichtung eingreift.

Um bei den hohen Taktraten der gattungsgemäßen Abfüllvorrichtung für Nahrungsmittel eine entsprechende Eingliederung von Tragelementen aus den Seitentrümern in die Hauptrümer zu gewährleisten, ist vorgesehen, dass das Hubwerk ein Haltemittel aufweist, welches ein Tragelement in horizontaler Ausrichtung zur Eingliederung in ein Haupttrum auch ohne Unterstützung der Hubeinrichtung hält.

So ist gewährleistet, dass das Tragelement zur Eingliederung ins Haupttrum bereit steht, das Hubwerk zur Aufnahme des nächsten Tragelementes jedoch wieder in das andere Haupttrum verfahren werden kann.

Konkret ist vorgesehen, dass das Haltemittel eine U-Schiene ist, die das Tragelement in Vertikalposition zur Eingliederung in ein Haupttrum hält.

Bei einer besonders bevorzugten Ausführungsform ist vorgesehen, dass das Hubwerk den Antrieb zur Förderung der Tragelemente durch ein Haupttrum trägt, insbesondere wenn der Antrieb ein Wirkelement aufweist, welches zeitgleich ein Tragelement in ein Haupttrum eingliedert und die übrigen Tragelemente durch dasselbe Haupttrum bewegt.

Weiterhin ist vorgesehen, dass das Wirkelement ein ortsfest angeordnetes Zahnrad ist, dessen Rotationsachse in der vertikalen Trennebene zwischen Haupttrum und Seitentrum angeordnet ist.

Dies ermöglicht es, dass das Tragelement mittels der Hubeinrichtung von hinsichtlich der Standfläche der Vorrichtung unten her an das Wirkelement des Antriebs herangeführt ist.

Weitere Vorteile der Erfindung und ein besseres Verständnis ergeben sich aus der nachfolgenden Beschreibung eines Ausführungsbeispiels. Es zeigen:
- Fig. 1:: die Gesamtansicht der erfindungsgemäßen Vorrichtung;
- Fig. 2:: eine Teilansicht der Vorrichtung gemäß Fig. 1 auf ein ein Seitentrum bildendes Hubwerk,

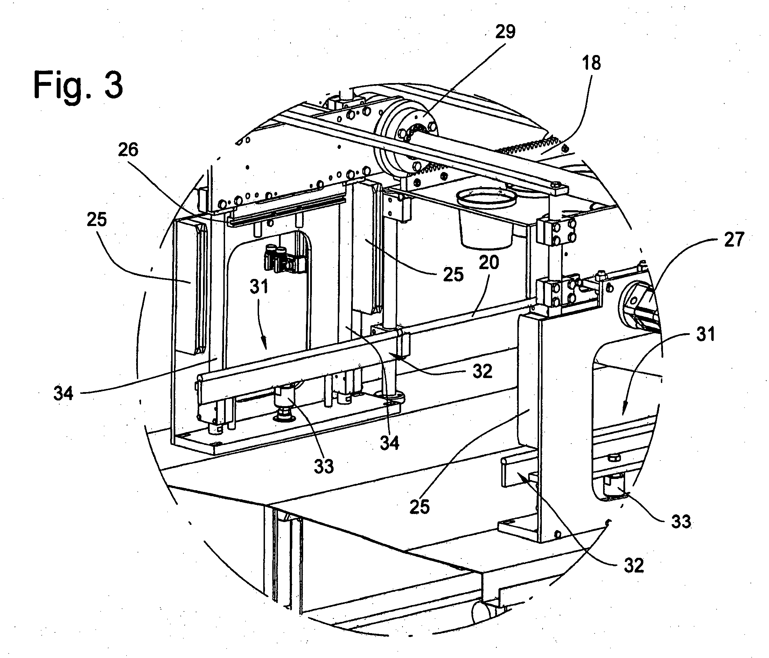

- Fig. 3:: eine Detailansicht des Hubwerks gemäß Fig. 2,
- Fig. 4:: Detailansicht des Hubwerks gemäß Fig. 2 mit offenem Haltemittel,
- Fig. 5:: eine Darstellung gemäß Fig. 4 mit geschlossenem Haltemittel,
- Fig. 6: eine Darstellung des Tragelementes.

In den Figuren ist eine erfindungsgemäße Vorrichtung insgesamt mit der Bezugsziffer 10 bezeichnet.

Die Vorrichtung 10 dient dem Abfüllen von flüssigen bis pastösen Nahrungsmitteln in Behälter 11, die mittels insgesamt mit der Bezugsziffer 12 bezeichneten Tragelementen durch die Vorrichtung 10 entlang an nicht dargestellter Arbeitsstationen geführt werden.

Die Vorrichtung 10 selbst untergliedert sich in ein bezüglich der Standfläche der Vorrichtung 10 horizontal ausgerichtetes Obertrum OT und eine parallel dazu angeordnetes Untertrum UT. In der Regel befinden sich die Arbeitsstationen zur Behandlung der Behälter 11 oberhalb des Obertrums OT, es gibt jedoch auch Anlagen, bei denen die zwischen Obertrum OT und Untertrum UT angeordnet sind, und die Behälter 11 vornehmlich im Untertrum UT behandelt werden. Aus diesem Grund können Obertrum OT und Untertrum UT auch als Haupttrümer bezeichnet werden.

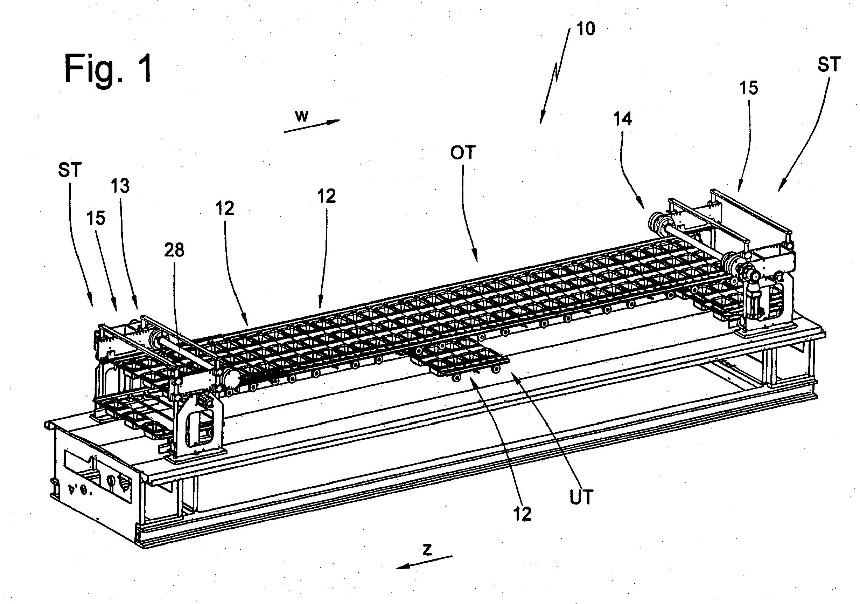

Um einen Umlauf der Tragelemente 12 zu gewährleisten, werden diese über Seitentrümer ST zwischen den Haupttrümern bewegt. Die Tragelemente 12 durchlaufen die in Fig. 1 dargestellte Vorrichtung 10 beispielsweise vom linken Seitentrum ST, welches mit einen Antrieb 13 versehen ist, in Förderrichtung w zum rechten Seitentrum ST, welches eine Bremseinrichtung 14 trägt. Antrieb 13 und Bremseinrichtung 14 begrenzen das Obertrum OT.

Die Tragelemente 12 gelangen dann über das rechte Seitentrum ST, welches als später noch genauer zu beschreibendes Hubwerk 15 ausgebildet ist, in das Untertrum UT. Von dort wird das Tragelement 12 zurück zum linken Seitentrum ST bewegt und durch das dortigen Hubwerk 15 vertikal bis auf die Höhe des Obertrums OT verfahren und in das Obertrum OT eingegliedert.

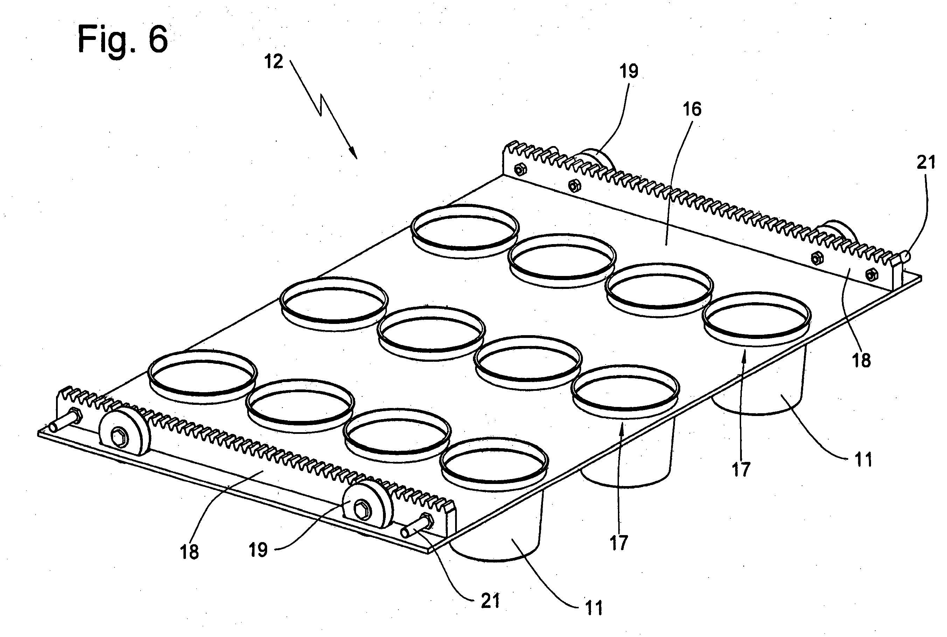

In Fig. 6 ist ein insgesamt mit der Bezugsziffer 12 bezeichnetes Tragelement der Vorrichtung 10 dargestellt. Es umfasst im vorliegenden Ausführungsbeispiel ein blech- oder plattenartig ausgebildetes Zellenbrett 16, welches mit einer Vielzahl von Aufnahmen 17 für Behälter 11 versehen ist. Die Aufnahmen 17 sind quer zur Förderrichtung w in Reihen nebeneinander und in Förderrichtung w in Bahnen hintereinander angeordnet.

Das Tragelement 12 weist ferner auf dem Zellenbrett 16 montierte Zahnleisten 18 auf, in welche der Antrieb 13 eingreift, um das Tragelement 12 in Förderrichtung w zu bewegen. Auch greift die Bremseinrichtung 14 in die Zahnleisten 18 ein, um den Zellenbrettverbund, der in Fig. 1 im Obertrum OT angeordnet ist, kontrolliert verzögern zu können.

Die Zahnleiste 18 trägt darüber hinaus Rollen 19, auf denen das Tragelement 12 auf Laufleisten 20 durch die Vorrichtung 10 bewegt wird. Letztlich tragen die Zahnleisten 18 auch Positionierstifte 21, auf die im Folgenden noch eingegangen wird.

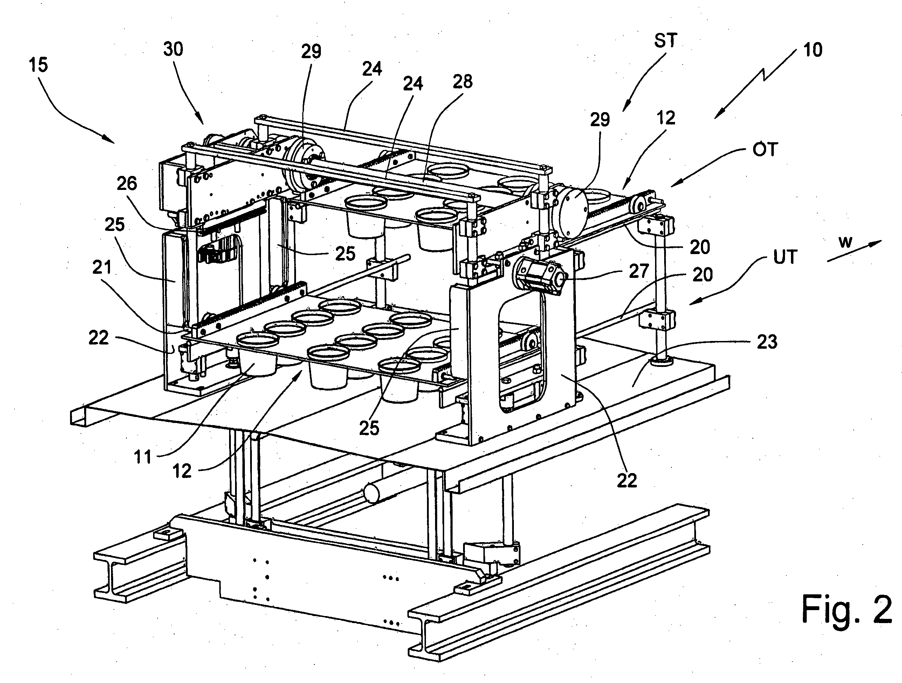

In Fig. 2 ist eine Teilansicht der Vorrichtung 10 dargestellt. Gezeigt ist vornehmlich der Bereich des linksseitigen Seitentrums ST mit Blick auf dessen insgesamt mit 15 bezeichneten Hubwerks.

Das Hubwerk 15 ist etwa torartig oder rahmenartig ausgebildet und umfasst zunächst zwei Seitenwangen 22, die stehend auf einem Maschinentisch 23 befestigt und über Stabilisierungsleisten 24 miteinander verbunden sind. Zwischen Maschinentisch 23 und Stabilisierungsleiste 24 sind das Obertrum OT und das Untertrum UT mit ihren Laufleisten 20 angeordnet.

Wie der Fig. 2 gut zu entnehmen ist, sind die Laufleisten 20 von Obertrum OT und Untertrum UT innerhalb der durch die Seitenwangen 22 gebildeten Rahmenkontur angeordnet, so dass die durch die Laufleisten 20 von Obertrum OT und Untertrum UT gebildete Bewegungsbahn der Tragelemente auch in dem durch das Hubwerk 15 gebildeten Seitentrum frei ist.

Das Hubwerk 15 umfasst weiterhin außerhalb der Bewegungsbahn der Tragelemente 12 angeordnete Führungseinrichtungen in Form von Vertikalschienen 25. Diese erstrecken sich entlang des Verfahrweges des Tragelementes 12 zwischen Untertrum UT und Obertrum OT. Auch Haltemittel in Form von Horizontalschienen 26 sind Teil des Hubwerkes 15. Sie sind in der Ebene der Zellenbretter 16 im Obertrum OT angeordnet und in Richtung Bewegungsbahn der Tragelemente 12 einrückbar. Hierzu sind sie mit außen an den Seitenwangen 22 angeordneten Stellzylindern 27 versehen.

Letztlich tragen die Seitenwangen 22 eine Antriebsachse 28, an welcher im Bereich einer jeden Seitenwange 22 Zahnräder 29 angeordnet sind. Mitteils eines Motors 30 werden die auf der Achse 28 angeordneten Zahnräder 29 in Rotation versetzt und greifen in die Zahnleisten 18 der Tragelemente 12 des Obertrums OT sowie des Seitentrums ST ein, sofern das Tragelement 12 des Seitentrums ST in der Ebene des Obertrums OT angeordnet ist. Die Zahnräder 29 bewegen sowohl das im Obertrum OT angeordnete Tragelement 12 als auch das im Seitentrum ST in der Ebene des Obertrums OT angeordnete Tragelement 12 in Förderrichtung w.

Die Hubeinrichtung des Hubwerks ist insgesamt mit der Bezugsziffer 31 bezeichnet und umfasst insbesondere zwei Laufleistenabschnitte 32, die mit je einem Hubkolben 33 gekoppelt sind. Diese Laufleistenabschnitte 32 sind in einer durch die übereinander angeordneten Laufleisten 20 des Obertrums OT und des Untertrums UT aufgespannten Ebene angeordnet, so dass sie je nach Vertikalposition entweder mit den Laufleisten 20 des Obertrums OT oder den Laufleisten 20 des Untertrums UT fluchtend ausgerichtet sind. Zur sicheren Vertikalführung der Laufleistenabschnitte 32 mittels der Hubkolben 33 sind die Laufleistenabschnitte 32 an Vertikalstreben 34 geführt.

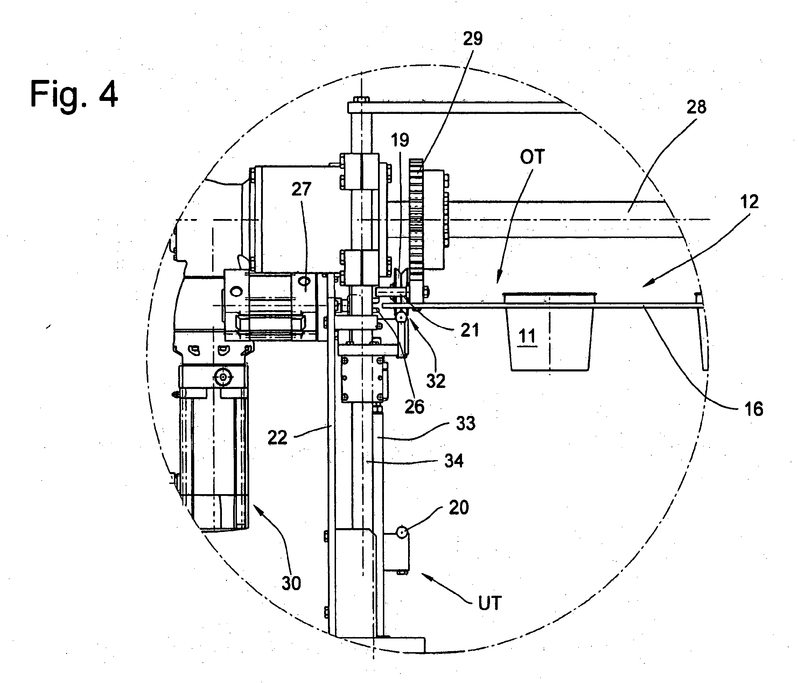

Fig. 4 zeigt einen weiter vergrößerten Detailbereich des Hubwerkes 15.

Der Laufleistenabschnitt 32 befindet sich fluchtend in Förderrichtung w vor der zugehörigen Laufleiste 20 des Obertrums OT im Seitentrum ST. Die Förderrichtung w läuft in Fig. 4 senkrecht zur Papierebene. Auf dem Laufleistenabschnitt 32 sitzt ein Tragelement 12 mit seinen Rollen 19 auf. Die Hubeinrichtung 31 hat in der Darstellung der Fig. 4 das Tragelement 12 in die Ebene des Obertrums OT befördert. Das Zellenbrett 16 ist fluchtend mit der Aufnahmevertiefung der U-förmig ausgebildeten Horizontalschiene 26 ausgerichtet. Unterhalb des Laufleistenabschnittes 32 ist die Laufleiste 20 des Untertrums UT erkennbar.

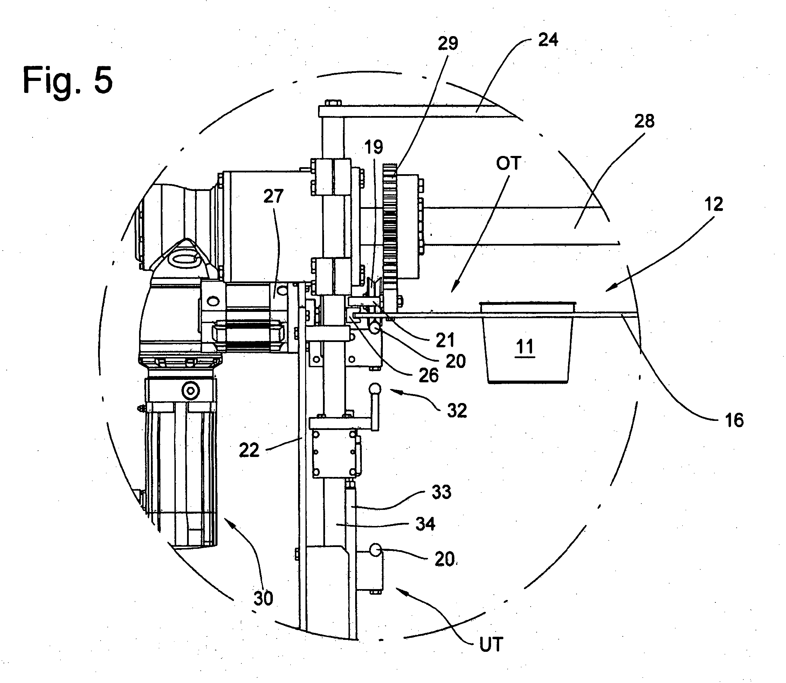

Die Darstellung der Fig. 5 entspricht im Wesentlichen der Darstellung der Fig. 4. Der wesentliche Unterschied zu Fig. 4 liegt darin, dass der Stellzylinder 27 eingerückt ist und die Horizontalschiene 26 gegen die parallel zur Förderrichtung angeordneten Seitenbereiche des Zellenbrettes 16 verfahren hat. Die Horizontalschiene 26 nimmt so das Zellenbrett 16 in ihrer Aufnahmevertiefung auf und hält es in der Ebene des Obertrum OT. So ist es möglich, dass der Laufleistenabschnitt 32 mittels der Hubkolben 33 in Richtung Untertrum UT verfahren wird, ohne dass das dargestellte Tragelement 12 bereits in das Obertrum OT selbst eingegliedert ist. Dies ist entsprechend in Fig. 5 dargestellt, so dass nunmehr im Obertrum OT die Laufleiste 20 sichtbar ist, die in Fig. 4 noch durch den fluchtend ausgerichteten Laufleistenabschnitt 32 verdeckt war.

Die Funktion der Vorrichtung insbesondere des Hubwerkes wird nun im Folgenden dargestellt:

Wie schon vorerwähnt, durchlaufen die Tragelemente 12 auf Rollen 19 zunächst das Obertrum OT ausgehend vom Antrieb 13 in Förderrichtung w bis zur Bremseinrichtung 14. Antrieb 13, genauer die Antriebsachse 28, und die Bremseinrichtung 14 mit ihrer nicht näher bezeichneten Antriebsachse bilden den Anfang und das Ende des Obertrums OT aus.

Die Tragelemente 12 werden vom Antrieb 13 gegen die Bremseinrichtung 14 in das rechtseitige Seitentrum ST der Fig. 1 verbracht, welches ein Hubwerk 15 aufweist, welches analog zum vorbeschriebenen Hubwerk 15 des antriebsseitigen Seitentrums ST ausgebildet ist. Vor diesem Hubwerk 15 werden die Tragelemente 12 vertikal nach unten ins Untertrum UT verfahren und dort mittels einer nicht näher beschriebenen Fördereinrichtung, wie beispielsweise mittels eines Zahnriemens, in Förderrichtung z zum linksseitigen Seitentrum ST geführt. Das linksseitige Hubwerk 15 bewegt die Tragelemente 12 vertikal zurück in die Ebene des Obertrums OT, von wo sie durch den Antrieb 13 wieder in das Obertrum OT eingegliedert werden.

Im Hubwerk 15 selbst sind die Tragelemente 12 auf den von den Laufleisten 20 separierten Laufleistenabschnitten 32 der Hubeinrichtung 31 angeordnet. Die Positionierstifte 21 sind fluchtend zu den Vertikalschienen 25 angeordnet, wie es insbesondere aus Fig. 2 hervorgeht.

Nunmehr ist das in Fig. 2 in der Ebene des Untertrums UT im Seitentrum ST angeordnete Tragelement 12 in die Ebene des Obertrums OT zu fördern. Hierzu verfährt die Hubeinrichtung 31 vertikal in Richtung Obertrum OT nach oben, die Positionierungsstifte 21 greifen in die Vertikalschiene 25 ein, so dass eine hinsichtlich der Längsachse der Vorrichtung 10 korrekte Ausrichtung des Tragelementes 12 im Seitentrum ST sichergestellt ist.

Ist das Tragelement 12 im Seitentrum ST in der Ebene des Obertrums OT angeordnet, befindet sich das Zellenbrett 16 in horizontal fluchtender Ausrichtung mit den Horizontalschienen 26 (siehe Fig. 4). Im nächsten Schritt rücken die Stellzylinder 27 die Horizontalschiene 26 ein, so dass deren Aufnahmevertiefungen das Zellenbrett 16 umschließen und in der Ebene des Obertrums OT halten. Die Hubeinrichtung 31 verfährt nunmehr die Laufleistenabschnitte 32 zurück in die Ebene des Untertrums UT (siehe Fig. 5). Zu diesem Zeitpunkt ist das in der Ebene des Obertrums OT im Seitentrum ST gelagerte Tragelement 12 noch nicht in das Obertrum OT eingegliedert.

Die Eingliederung erfolgt nun im nächsten Schritt, indem das Zahnrad 29 des Antriebs 13 entsprechend in Rotation versetzt wird und das Tragelement 12 in das Obertrum OT hinein schiebt. Wie in Zusammenschau mit Fig. 1 ersichtlich ist, wird durch das jeweilige Nachschieben eines Tragelementes 12 aus dem Seitentrum ST ins Obertrum OT der im Obertrum OT angeordnete Tragelementverbund in Förderrichtung w vorbewegt, wobei das in Förderrichtung w letzte Tragelement vor der Bremseinrichtung 14 in das der Bremseinrichtung 14 nachgeordnete Seitentrum ST gedrückt wird.

Das Absenken ins Untertrum UT erfolgt dann in umgekehrter Weise. Die Laufleistenabschnitte 32 befinden sich zum Zeitpunkt des Eintritts des Tragelementes 12 in das mit Bremseinrichtung 14 versehene Seitentrum ST nach Möglichkeit bereits in der Ebene des Obertrums OT. Das auf dem dortigen Laufleistenabschnitten 32 nunmehr aufsitzende Tragelement 12 wird vertikal nach unten in die Ebene des Untertrums UT verfahren, wobei die axiale Ausrichtung wiederum durch Vertikalschienen 25 gesichert ist. Im Untertrum UT zieht eine nicht näher dargestellte Fördereinrichtung, wie beispielsweise der vorgenannte Zahnriemen, das Tragelement 12 zurück zu seinem Ausgangspunkt im antriebsseitigen Seitentrum ST.

Abgesehen von seinem vergleichsweise einfachen Aufbau besticht das Hubwerk 15 der Seitentrümer ST insbesondere dadurch, dass keinerlei Aggregate innerhalb der Bewegungsbahnen der Tragelemente 12 im Obertrum OT oder Untertrum UT angeordnet sind. Infolgedessen können die Tragelemente schnell und einfach an den Seitentrümern ST entnommen werden und gegen Tragelemente anderer Art und Güte getauscht werden. So lässt sich ein sogenannter Formatwechsel, bei welchem die Vorrichtung 10 zur Befüllung andersartiger Behälter umgerüstet wird, schnell und einfach bewerkstelligen.

### Bezugszeichenliste:

- 10: Vorrichtung
- 11: Behälter
- 12: Tragelement
- 13: Antrieb
- 14: Bremseinrichtung
- 15: Hubwerk
- 16: Zellenbrett
- 17: Aufnahme
- 18: Zahnleiste
- 19: Rollen
- 20: Laufleiste
- 21: Positionierstift
- 22: Seitenwange
- 23: Maschinentisch
- 24: Stabilisierungsleiste
- 25: Vertikalschiene
- 26: Horizontalschiene
- 27: Stellzylinder
- 28: Antriebsachse
- 29: Zahnrad
- 30: Motor
- 31: Hubeinrichtung
- 32: Laufleistenabschnitt
- 33: Hubkolben
- 34: Vertikalstrebe
- OT: Obertrum
- UT: Untertrum
- ST: Seitentrum
- w: Richtung
- z: Richtung

## Patentansprüche

1. Vorrichtung (10) zum Befüllen von Behältern (11), insbesondere von Flaschen und Bechern, mit Nahrungsmitteln, insbesondere mit dünnflüssigen bis pastösen Molkerei- und Fettprodukten, Säften, Wässern oder dergleichen,
- mit einem Obertrum OT und einem Untertrum UT, welche die Haupttrümer der Vorrichtung (10) sind und
- mit Seitentrümern ST, die die Haupttrümer miteinander verbinden,
- mit einer Vielzahl von endlosantriebsmittelfrei aneinander angeordneten Tragelementen (12), die mit Aufnahmen (17) für die Behälter (11) versehen und durch die Vorrichtung (10) und entlang der Trümer OT, UT, ST und entlang von Arbeitsstationen geführt sind,
- mit Laufleisten (20), auf denen die Tragelemente(12) bei der Führung durch die Haupttrümer aufliegen,
- mit einem Antrieb (13), der die Tragelemente (12) zumindest entlang der Arbeitsstationen führt und
- mit zumindest einem als Hubwerk (15) ausgebildeten Seitentrum ST, vermittels dessen die Tragelemente (12) bei Ihrem Lauf durch die Vorrichtung (10) zwischen den Haupttrümern wechseln, **dadurch gekennzeichnet, dass** das Hubwerk (15) eine ausschließlich vertikal verfahrbare Hubeinrichtung (31) zur Überführung der Tragelemente (12) von einem Haupttrum in das andere Haupttrum aufweist.

2. Vorrichtung nach Anspruch 1, **dadurch gekennzeichnet, dass** die Hubeinrichtung (31) mit Laufleistenabschnitten (32) versehen ist, die zur Aufnahme der Tragelemente (12) in die Ebene der Laufleisten (20) der Haupttrümer eingliederbar sind.

3. Vorrichtung nach Anspruch 1 oder 2, **dadurch gekennzeichnet, dass** das Hubwerk (15) eine Führungseinrichtung aufweist, die eine positionsfeste Anordnung eines Tragelementes (12) im Hubwerk (15) während der Vertikalbewegung sicherstellt.

4. Vorrichtung nach Anspruch 3, **dadurch gekennzeichnet, dass** die Führungseinrichtung als Vertikalschiene (25) ausgebildet ist, in die ein Positionierstift (21) des Tragelementes (12) während der Vertikalbewegung der Hubeinrichtung (31) eingreift.

5. Vorrichtung nach einem der vorhergehenden Ansprüche, **dadurch gekennzeichnet, dass** das Hubwerk (15) ein Haltemittel aufweist, welches ein Tragelement (12) in horizontaler Ausrichtung zur Eingliederung in ein Haupttrum auch ohne Unterstützung der Hubeinrichtung (31) hält.

6. Vorrichtung nach Anspruch 5, **dadurch gekennzeichnet, dass** das Haltemittel eine U-Schiene (26) ist, die das Tragelement (12) in Vertikalposition zur Eingliederung in ein Haupttrum hält.

7. Vorrichtung nach einem der vorhergehenden Ansprüche, **dadurch gekennzeichnet, dass** das Hubwerk (15) den Antrieb (13) zur Förderung der Tragelemente (12) durch ein Haupttrum trägt.

8. Vorrichtung nach Anspruch 7, **dadurch gekennzeichnet, dass** der Antrieb (13) ein Wirkelement aufweist, welches zeitgleich ein Tragelement (12) in ein Haupttrum eingliedert und die übrigen Tragelemente (12) durch dasselbe Haupttrum bewegt.

9. Vorrichtung nach Anspruch 8, **dadurch gekennzeichnet, dass** das Wirkelement ein ortsfest angeordnetes Zahnrad (29) ist, dessen Rotationsachse in der vertikalen Trennebene zwischen Haupttrum und Seitentrum ST angeordnet ist.

10. Vorrichtung nach Anspruch 8 oder 9, **dadurch gekennzeichnet, dass** das Tragelement (12) mittels der Hubeinrichtung (31) von hinsichtlich der Standfläche der Vorrichtung (10) unten her an das Wirkelement des Antriebs (13) herangeführt ist.

11. Vorrichtung nach einem der vorhergehenden Ansprüche, **dadurch gekennzeichnet, dass** das die Aggregate des Hubwerks (15) außerhalb einer Bewegungsbahn der Tragelemente (12) durch das jeweilige Haupttrum angeordnet sind.

## Claims

1. Apparatus (10) for filling containers (11), particularly bottles and pots, with foodstuffs, particularly highly fluid to pasty dairy and fatty products, juices, waters or the like, said apparatus having:
- an upper run OT and a lower run UT which are the main runs of the apparatus (10);
- lateral runs ST which connect the main runs to one another;
- a plurality of carrying elements (12) which are arranged against one another in a manner devoid of endless driving means, are provided with receptacles (17) for the containers (11) and are guided through the apparatus (10) and along the runs OT, UT, ST and along work stations;
- running strips (20) on which the carrying elements (12) rest when being guided through the main runs;
- a drive (13) which guides the carrying elements (12) at least along the work stations; and
- at least one lateral run ST which is constructed as a lifting mechanism (15) and by means of which the carrying elements (12) change, as they run through the apparatus (10), between the main runs,
**characterised in that**
the lifting mechanism (15) has a lifting arrangement (31), which is capable of exclusively vertical travel, for transferring the carrying elements (12) from one main run to the other main run.

2. Apparatus according to Claim 1, **characterised in that** the lifting arrangement (31) is provided with runningstrip sections (32) which can be incorporated into the plane of the running strips (20) of the main runs for the purpose of receiving the carrying elements (12).

3. Apparatus according to Claim 1 or 2, **characterised in that** the lifting mechanism (15) has a guiding arrangement which ensures that a carrying element (12) is arranged during the vertical movement within the lifting mechanism (15) in a manner fixed in position.

4. Apparatus according to Claim 3, **characterised in that** the guiding arrangement is constructed as a vertical rail (25) in which a positioning pin (21) belonging to the carrying element (12) engages during the vertical movement of the lifting arrangement (31).

5. Apparatus according to one of the preceding claims, **characterised in that** the lifting mechanism (15) has a holding means which holds a carrying element (12) in a horizontal orientation for incorporation into a main run, even without the support of the lifting arrangement (31).

6. Apparatus according to Claim 5, **characterised in that** the holding means is an U-shaped rail (26) which holds the carrying element (12) in a vertical position for incorporation into a main run.

7. Apparatus according to one of the preceding claims, **characterised in that** the lifting mechanism (15) carries the drive (13) for conveying the carrying elements (12) through a main run.

8. Apparatus according to Claim 7, **characterised in that** the drive (13) has an actuating element which isochronously incorporates a carrying element (12) into a main run and moves the remaining carrying elements (12) through the same main run.

9. Apparatus according to Claim 8, **characterised in that** the actuating element is a gear wheel (29) which is arranged in a stationary manner and the axis of rotation of which is arranged in the vertical junction plane between the main run and the lateral run ST.

10. Apparatus according to Claim 8 or 9, **characterised in that** the carrying element (12) is guided, by means of the lifting arrangement (31), up to the actuating element of the drive (13) from below, with respect to the surface on which the apparatus (10) stands.

11. Apparatus according to one of the preceding claims, **characterised in that** the units of the lifting mechanism (15) are arranged outside a path of movement of the carrying elements (12) through the respective main run.

## Revendications

1. Dispositif (10) pour le remplissage de récipients (11), en particulier des bouteilles et des pots, avec des produits alimentaires, en particulier avec des produits laitiers et gras, liquides à pâteux, des jus, des eaux ou similaires, avec un brin supérieur (OT) et un brin inférieur (UT) lesquels sont les brins principaux du dispositif (10) et avec des brins latéraux (ST) qui relient ensemble les brins principaux, avec une multitude d'éléments de support (12) disposés les uns contre les autres, sans moyen d'entraînement et sans fin qui sont munis de logements (17) pour les récipients (11) et sont guidés à travers le dispositif (10), le long des brins (OT, UT, ST) et le long des postes de travail, avec des barres conductrices de roulement (20) sur lesquelles les éléments de support (12) reposent lors du guidage à travers les brins principaux, avec un entraînement (13) qui guide les éléments de support (12) au moins le long des postes de travail et avec au moins un brin latéral (ST) conçu en tant que moyen de levage (15), au moyen duquel les éléments de support (12) alternent lors de leur parcours à travers le dispositif (10) entre les brins principaux, **caractérisé en ce que** le moyen de levage (15) présente un dispositif de levage (31) mobile uniquement verticalement pour le transfert des éléments de support (12) d'un brin principal à l'autre brin principal.

2. Dispositif selon la revendication 1, **caractérisé en ce que** le dispositif de levage (31) est muni de sections de barre conductrice de roulement (32) qui peuvent être intégrées pour le logement des éléments de support (12) dans le plan des barres conductrices de roulement (20) des brins principaux.

3. Dispositif selon la revendication 1 ou 2, **caractérisé en ce que** le dispositif de levage (15) présente un dispositif de guidage, qui garantit une installation fixe d'un élément de support (12) dans le moyen de levage (15) pendant le mouvement vertical.

4. Dispositif selon la revendication 3, **caractérisé en ce que** le dispositif de guidage est conçu en tant que rail vertical (25) dans lequel une broche de positionnement (21) de l'élément de support (12) est en prise pendant le mouvement vertical du dispositif de levage (31).

5. Dispositif selon l'une des précédentes revendications, **caractérisé en ce que** le moyen de levage (15) présente un moyen de maintien lequel tient un élément de support (12) dans l'orientation horizontale pour intégration dans un brin principal même sans aide du dispositif de levage (31).

6. Dispositif selon la revendication 5, **caractérisé en ce que** le moyen de maintien est un rail en U (26) qui tient l'élément de support (12) en position verticale pour intégration dans un brin principal.

7. Dispositif selon l'une des précédentes revendications, **caractérisé en ce que** le moyen de levage (15) porte l'entraînement (13) pour le transport des éléments de support (12) à travers un brin principal.

8. Dispositif selon la revendication 7, **caractérisé en ce que** l'entraînement (13) présente un élément actif lequel intègre en même temps un élément de support (12) dans un brin principal et déplace les autres éléments de support (12) à travers le même brin principal.

9. Dispositif selon la revendication 8, **caractérisé en ce que** l'élément actif est une roue dentée (29) disposée de manière fixe, dont l'axe de rotation est disposé dans le plan de séparation vertical entre le brin principal et le brin latéral (ST).

10. Dispositif selon la revendication 8 ou 9, **caractérisé en ce que** l'élément de support (12) est approché au niveau de l'élément actif de l'entraînement (13) au moyen du dispositif de levage (31), par en dessous par rapport à la face d'appui du dispositif (10).

11. Dispositif selon l'une des précédentes revendications, **caractérisé en ce que** les unités du moyen de levage (15) sont disposées en dehors d'une trajectoire de mouvement des éléments de support (12) à travers chaque brin principal.
